# EUROPEAN PATENT APPLICATION

(11) **EP 4 621 928 A1**
(43) Date of publication of application: **24.09.2025**
(21) Application number: 23907743.1
(22) Date of filing: 20.12.2023
(51) Int. Cl.: H01M 10/44, H01M 4/1391, H01M 4/04, H01M 10/058, H01M 4/505, H01M 10/052, H01M 4/02

(54) **METHOD FOR MANUFACTURING LITHIUM SECONDARY BATTERY**

(30) Priority: 23.12.2022 KR 20220183706
(71) Applicant: LG Energy Solution, Ltd., Seoul 07335 (KR)
(72) Inventor: JANG, Daeun, Daejeon 34122 (KR); KANG, Hyeyeon, Daejeon 34122 (KR); KANG, Bohyun, Daejeon 34122 (KR); SUNG, Kiwon, Daejeon 34122 (KR); PARK, Jinseo, Daejeon 34122 (KR); LEE, Yung Jong, Daejeon 34122 (KR); JO, Youngseong, Daejeon 34122 (KR)
(74) Representative: Hoffmann Eitle
(86) International application number: PCT/KR2023/021131
(87) International publication number: WO 2024/136460

(57) **Abstract**

The present disclosure relates to a method for manufacturing a lithium secondary battery, the method comprising the steps of: preparing a battery cell including a positive electrode, a negative electrode and an electrolyte, with the positive electrode containing a lithium-rich manganese-based oxide in which the content of manganese in all metals excluding lithium is greater than 50 mol%, and the ratio of the number of moles of lithium to the number of moles of all metals excluding lithium (Li/Me) is greater than 1; and charging and discharging the battery cell at least once to activate the battery, wherein in the activating step, the battery cell is charged from SOC 60 to SOC 100 in a constant current mode, and then charged in a constant voltage mode, and the cut-off current at a constant voltage charging mode is 0.06C to 0.5C.

## Description

### [TECHNICAL FIELD]

### Cross Citation with Related Application(s)

This application claims the benefit of Korean Patent Application No. 10-2022-0183706 filed on December 23, 2022 with the Korean Intellectual Property Office, the disclosure of which is hereby incorporated by reference in its entirety.

The present disclosure relates to a method for manufacturing a lithium secondary battery, and more specifically, to a method for manufacturing a lithium secondary battery that can improve a suppression effect on the elution of a transition metal induced by an activation step of a lithium secondary battery containing a lithium-rich manganese-based oxide.

### [BACKGROUND]

Lithium secondary batteries are energy storage media that have been applied in various fields since they were commercially introduced in 1991. As the market for products equipped with lithium secondary batteries expands, research to increase the energy density of lithium secondary batteries has been actively conducted. One of the methods that is attracting the most attention is developing a positive electrode active material with a composition that can utilize a larger amount of lithium than before.

As a positive electrode active material that can utilize a larger amount of lithium, lithium-rich transition metal oxide having a layered structure and having a molar ratio of lithium to transition metal of more than 1 have been developed. A lithium secondary battery comprising such a lithium-rich transition metal oxide generally achieves high capacity by performing an activation process at a high voltage of 4.4V or more. However, when a high-voltage activation process is performed in this way, collapse of the crystal structure of the positive electrode is induced due to oxygen desorption, cation mixing, and the like in the crystal structure of the lithium-rich-based transition metal oxide, which induces the elution of a transition metal. Thereby, there is a problem that the capacity retention rate and voltage drop of the lithium secondary battery are greatly deteriorated.

### [Prior Art Literature]

### [Patent Literature]

Korean Unexamined Patent Publication No. 2021-0060825

### [DETAILED DESCRIPTION OF THE INVENTION]

### [Technical Problem]

The present disclosure has been made to solve the above problems, and it is therefore an object of the present disclosure to provide a method for manufacturing a lithium secondary battery containing a lithium-rich manganese-based oxide that can effectively suppress the elution of a transition metal in an activation step.

### [Technical Solution]

According to the present disclosure, there is provided a method for manufacturing a lithium secondary battery, the method comprising the steps of: preparing a battery cell including a positive electrode, a negative electrode and an electrolyte, with the positive electrode containing a lithium-rich manganese-based oxide in which the content of manganese in all metals excluding lithium is greater than 50 mol%, and the ratio of the number of moles of lithium to the number of moles of all metals excluding lithium (Li/Me) is greater than 1; and charging and discharging the battery cell at least once to activate the battery, wherein in the activating step, the battery cell is charged from SOC 60 to SOC 100 in constant current mode, and then charged in a constant voltage mode, and the cut-off current at a constant voltage charging mode is 0.06C to 0.5C.

The lithium-rich manganese-based oxide may be represented by the following Chemical Formula 1.

[Chemical Formula 1] LiₐNi_{b}Co_{c}Mn_{d}MₑO₂

wherein, in Chemical Formula 1, 1 < a, 0≤b≤0.5, 0≤c≤0.1, 0.5≤d<1.0, and 0≤e≤0.2, and M is at least one selected from the group consisting of Al, B, Co, W, Mg, V, Ti, Zn, Ga, In, Ru, Nb, Sn, Sr and Zr.

The end voltage of charge in a constant-current mode may be 4.5V to 4.6V.

Further, the current rate at a constant current charging mode may be 0.3C to 0.8C.

The activating step may comprise discharging from 0.3C to 0.7C until reaching at 2.0V.

### [Advantageous Effects]

The method for manufacturing a lithium secondary battery according to the present disclosure performs charging in a constant current-constant voltage mode in the terminal section of the activation charging step, that is, in the section where SOC is 60 or more, wherein the cut-off current is set to 0.06C to 0.5C when charging in the constant voltage mode, thereby decreasing the activation rate of the Li₂MnO₃ (monoclinic) phase in the crystal structure of the positive electrode active material, and thus effectively suppressing the elution of a transition metal from the positive electrode.

### [BRIEF DESCRIPTION OF THE DRAWINGS]

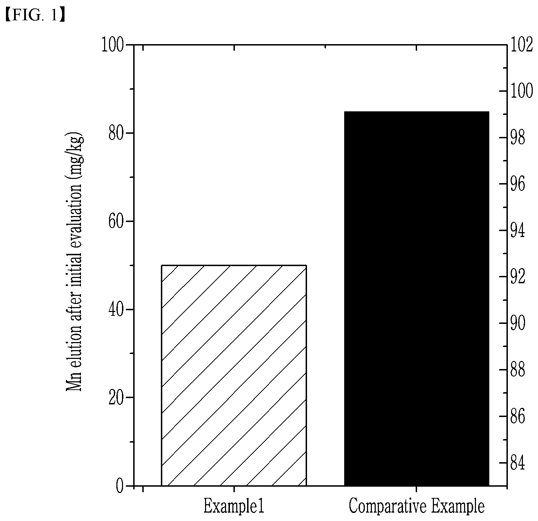

FIG. 1 is a graph showing the evaluation results of the elution suppression on the transition metal of a lithium secondary battery according to Experimental Example 2.

### [DETAILED DESCRIPTION OF THE EMBODIMENTS]

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

In the present disclosure, 'primary particle' refers to a particle unit in which grain boundaries do not appear to exist when observed with the field of view of 5000 to 20000 magnification using a scanning electron microscope. "Average particle size of primary particles" refers to the arithmetic average value of primary particles observed in a scanning electron microscope image calculated after measuring their particle sizes.

In the present disclosure, "secondary particle" is a particle formed by agglomerating a plurality of primary particles.

In the present disclosure, "average particle size D₅₀" means a particle size at which cumulative volumes of powder particles (e.g., positive electrode active material, negative electrode active material, etc.) reach 50% in the particle size distribution curve of the particles. The D₅₀ can be measured using a laser diffraction method. It can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution, and determining the particle size corresponding to 50% of cumulative volume.

Further, in the present disclosure, "SOC X" refers to a state where the percentage of capacity charged in the battery cell is X based on the discharge capacity that appears when the battery cell is discharged from 4.6 V to 2.0 V.

The present inventors have conducted repeated research to improve the elution of transition metal during the charging step for activation of a lithium secondary battery to which lithium-rich manganese-based oxide is applied, and as a result, found that this elution problem can be improved by performing the activating step under specific charging conditions when manufacturing a lithium secondary battery, and completed the present disclosure.

Now, a method for manufacturing a lithium secondary battery according to the present disclosure will be described.

The method for manufacturing a lithium secondary battery according to the present disclosure comprises a step of preparing a battery cell including a positive electrode, a negative electrode and an electrolyte, with the positive electrode containing a lithium-rich manganese-based oxide in which the content of manganese in all metals excluding lithium is greater than 50 mol%, and the ratio of the number of moles of lithium to the number of moles of all metals excluding lithium (Li/Me) is greater than 1; and
a step of charging and discharging the battery cell at least once to activate the battery,
wherein the activating step is characterized in that the battery cell is charged from SOC 60 to SOC 100 in a constant current mode, and then charged in a constant voltage mode, and the cut-off current at a constant voltage charging mode is 0.06C to 0.5C.

### (1) Step of preparing battery cell

First, a battery cell including a positive electrode, a negative electrode, and an electrolyte is prepared.

The battery cell can be prepared, for example, by forming an electrode assembly including a positive electrode and a negative electrode, housing the electrode assembly in a battery case, and then injecting an electrolyte to seal a battery case. At this time, the electrode assembly may include a separator between the positive electrode and the negative electrode.

Below, each component of the battery cell of the present disclosure will be described in more detail.

### Positive electrode

The positive electrode according to the present disclosure is a positive electrode active material, which includes lithium-rich manganese-based oxide in which the content of manganese in all metals excluding lithium is greater than 50 mol%, and the ratio of the number of moles of lithium to the number of moles of all metals excluding lithium (Li/Me) is greater than 1. Specifically, the positive electrode according to the present disclosure includes a positive electrode current collector, and a positive electrode active material layer formed on at least one surface of the positive electrode current collector, wherein the positive electrode active material layer includes a lithium-rich manganese-based oxide in which the ratio of the number of moles of lithium to the number of moles of all metals excluding lithium (Li/Me) is greater than 1.

In the case of lithium-rich manganese oxide containing surplus lithium, it has a structure of layered phase (LiM'O₂) and rock-salt phase (Li₂MnO₃) are mixed. During the initial activation process, the rock-salt phase is activated and excessive lithium ions are generated, thereby achieving high capacity.

Preferably, the lithium-rich manganese-based oxide may be represented by the following Chemical Formula 1.

[Chemical Formula 1] LiₐNi_{b}Co_{c}Mn_{d}MₑO₂

wherein, in Chemical Formula 1, M may be at least one selected from the group consisting of Al, B, Co, W, Mg, V, Ti, Zn, Ga, In, Ru, Nb, Sn, Sr and Zr.

On the other hand, a is the molar ratio of Li in the lithium-rich manganese-based oxide, and may be 1<a, 1.1≤a≤1.5, or 1.1≤a≤1.3. When a satisfies the above range, the irreversible capacity of the silicon-based negative active material can be sufficiently compensated, and high capacity characteristics can be realized.

The b is the molar ratio of Ni in the lithium-rich manganese-based oxide, and may be 0≤b≤0.5, 0.1≤b≤0.4, or 0.2≤b≤0.4.

The c is the molar ratio of Co in the lithium-rich manganese-based oxide, and may be 0≤c≤0.1, 0≤c≤0.08, or 0≤c≤0.05. If c exceeds 0.1, it is difficult to secure high capacity, and gas generation and deterioration of the positive electrode active material become intensified, and the life characteristics may deteriorate.

The d is the molar ratio of Mn in the lithium-rich manganese oxide, and may be 0.5≤d<1.0, 0.50≤d≤0.80, or 0.50≤d≤0.70. If d is less than 0.5, the proportion of the rock-salt phase becomes too small, so the effects of negative electrode irreversibility compensation and capacity improvement are slight.

The e is the molar ratio of the doping element M in the lithium-rich manganese-based oxide, and may be 0≤e≤0.2, 0≤e≤0.1, or 0≤e≤0.05. If the content of the doping element is too high, it may have an adverse effect on the capacity of the active material.

On the other hand, in the lithium-rich manganese-based oxide represented by [Chemical Formula 1], the ratio of the number of moles of Li to the number of moles of all metal elements excluding Li (Li/Me) may be 1.2 ~ 1.5, 1.25 ~ 1.5, or 1.25 ~ 1.4. When the Li/Me ratio satisfies the above range, rate characteristics and capacity characteristics can excellently exhibit. If the Li/Me ratio is too high, electrical conductivity may decrease and the rock-salt phase (Li₂MnO₃) may increase, which may increase the degradation rate. If the Li/Me ratio is too low, the effect of improving energy density is slight.

On the other hand, the composition of the lithium- rich manganese-based oxide may be represented by the following [Chemical Formula 2].

[Chemical Formula 2] X Li₂MnO₃ ·(1-X)Li[Ni_{1-y-z-w}Mn_{y}Co_{z}M_{w}]O₂

wherein, in [Chemical Formula 2], M may be at least one metal ion selected from the group consisting of Al, B, Co, W, Mg, V, Ti, Zn, Ga, In, Ru, Nb, Sn, Sr, and Zr.

The X refers to the ratio of the Li₂MnO₃ phase in the lithium-rich manganese-based oxide, and may be 0.2≤X≤0.5, 0.25≤X≤0.5, or 0.25≤X≤0.4. When the ratio of the Li₂MnO₃ phase in the lithium-rich manganese-based oxide satisfies the above range, it is possible to realize high capacity characteristics.

The y is the molar ratio of Mn on the LiM'O₂ layer, and may be 0.4≤y<1, 0.4≤y≤0.8, or 0.4≤y≤0.7.

The z is the molar ratio of Co in the LiM'O₂ layer, and may be 0≤z≤0.1, 0≤z≤0.08, or 0≤z≤0.05. If z is greater than 0.1, gas generation and deterioration of the positive electrode active material may become intensified, and the life characteristics may deteriorate.

The w is the molar ratio of the doping element M on the LiM'O₂ layer, and may be 0≤w≤0.2, 0≤w≤0.1, or 0≤w≤0.05.

On the other hand, the positive electrode active material according to the present disclosure may further include a coating layer on the surface of the lithium-rich manganese-based oxide, if necessary. When the positive electrode active material includes a coating layer, contact between the lithium-rich manganese oxide and the electrolyte is suppressed by the coating layer, and side reactions of the electrolyte are reduced, thereby obtaining the effect of improving the life characteristics

The coating layer may include a coating element M¹, and the coating element M¹ may be, for example, at least one selected from the group consisting of Al, B, Co, W, Mg, V, Ti, Zn, Ga, In, Ru, Nb, Sn, Sr, and Zr, preferably, Al, Co, Nb, W, and a combination thereof, and more preferably, Al, Co, and a combination thereof. The coating element M¹ may include two or more types, for example, Al and Co.

The coating element may be present in the coating layer, in oxide form, i.e., M¹Oz (1≤z≤4).

The coating layer can be formed through methods such as dry coating, wet coating, chemical vapor deposition (CVD), physical vapor deposition (PVD), and atomic layer deposition (ALD). Among these, it is preferable to form it through atomic layer deposition in that the coating layer can be formed to have a wider area.

The formation area of the coating layer may be 10 to 100%, preferably 30 to 100%, and more preferably 50 to 100%, based on the total surface area of the lithium-rich manganese-based oxide particles. When the formation area of the coating layer satisfies the above range, the effect of improving life characteristics is excellent.

On the other hand, the positive electrode active material according to the present disclosure may be in the form of secondary particles in which a plurality of primary particles are agglomerated, and the average particle size D₅₀ of the secondary particles may be 2 *µ*m to 10 *µ*m, preferably 2 *µ*m to 8 *µ*m, and more preferably 4 *µ*m to 8 *µ*m. When the D₅₀ of the positive electrode active material satisfies the above range, the electrode density can be excellently achieved, and degradation of capacity and rate characteristics can be minimized.

Further, the positive electrode active material may have a BET specific surface area of 1m²/g ~ 10m²/g, 3 ~ 8m²/g or 4 ~ 6m²/g. If the BET specific surface area of the positive electrode active material is too low, the reaction area with the electrolyte is insufficient, which makes it difficult to achieve sufficient capacity. If the specific surface area is too high, moisture absorption is rapid and side reactions with electrolytes are accelerated, which makes it difficult to secure life characteristics.

On the other hand, the lithium-rich manganese-based oxide can be produced by mixing a transition metal precursor and a lithium raw material and then firing the mixture.

As the lithium raw material, for example, lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNO₃), etc.), chlorides (e.g., lithium chloride (LiCl), etc.), and the like can be used, and among these, one type alone or a mixture of two or more types can be used.

On the other hand, the transition metal precursor may be in the form of hydroxides, oxides, or carbonates. When the carbonate form of the precursor is used, it is more preferable in that a positive electrode active material with a relatively high specific surface area can be produced.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and proceeding with a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄, MnCO₃, Mn(NO₃)₂, MnSO₄ ·H₂O, manganese acetate, manganese halide, and the like.

The ammonium cation complex forming agent may be at least one selected from the group consisting of NH₄OH, (NH₄)₂SO₄, NH₄NO₃, NH₄Cl, CH₃COONH₄, and (NH₄)₂CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, a hydroxide form of the precursor can be obtained, and when Na₂CO₃ is used as a basic compound, a carbonate form of the precursor can be obtained. Further, when a basic compound and an oxidizing agent are used together, an oxide form of the precursor can be obtained.

On the other hand, the transition metal precursor and the lithium raw material can be mixed in an amount such that the molar ratio of total transition metals (Ni+Co+Mn):Li is 1:1.05 ~ 1:2, preferably 1:1.1 ~ 1:1.8, and more preferably 1:1.25 ~ 1:1.8.

On the other hand, the firing may be performed at a temperature of 600°C to 1000°C or 700°C to 950°C, and the firing time may be 5 hours to 30 hours or 5 hours to 20 hours. Further, the firing atmosphere may be an air atmosphere or an oxygen atmosphere, for example, an atmosphere containing oxygen at 20 to 100% by volume.

On the other hand, the positive electrode active material layer may further include a conductive material and a binder in addition to the positive electrode active material.

Examples of the conductive material include spherical or flaky graphite; carbon-based material such as carbon black, acetylene black, ketjen black, channel black, furnace black, lamp black, thermal black, carbon fiber, single-wall carbon nanotubes, and multi-wall carbon nanotubes; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like. Among these, one type alone or a mixture of two or more types can be used. The conductive material can be contained in an amount of 0.1 to 20% by weight, 1 to 20% by weight, or 1 to 10% by weight based on the total weight of the positive electrode active material layer.

Further, the binder is a component that assists in the attachment between the positive electrode active material particles and in the adhesive force between the positive electrode active material and the current collector, and examples thereof include a fluororesin binder including polyvinylidene fluoride(PVDF) or polytetrafluoroethylene(PTFE); a rubber-based binder including styrene-butadiene rubber (SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binder including polyethylene and polypropylene; a polyimide-based binder; a polyester-based binder; a silane-based binder, and the like. The binder may be contained in an amount of 1 to 20% by weight, 2 to 20% by weight, or 2 to 10% by weight based on the total weight of the positive electrode active material layer.

### Negative electrode

The negative electrode may include, for example, a negative electrode current collector and a negative electrode active material layer located on the negative electrode current collector. The negative electrode active material layer may optionally include a binder and a conductive material along with the negative electrode active material.

The negative electrode current collector is not particularly limited as long as it has high conductivity without causing a chemical change in the battery, and, for example, copper, stainless steel, aluminum, nickel, titanium, fired carbon, or copper or stainless steel of which surface is treated with carbon, nickel, titanium, silver, or the like, an aluminum-cadmium alloy, or the like can be used. Further, the negative electrode current collector may generally have a thickness of 3 *µ*m to 500 *µ*m. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

As the negative electrode active material, a compound capable of reversible intercalation and deintercalation of lithium can be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiO_{β} (0<β<2), SnO₂, vanadium oxide, and lithium vanadium oxide; a composite containing the metallic compound and the carbonaceous material, such as Si-C composite or Sn-C composite, and any one alone or a mixture of two or more thereof can be used.

Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, carbon fiber, and carbon nanotube; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one type alone or a mixture of two or more types of them can be used. The conductive material may typically be contained in an amount of 1 to 30% by weight, preferably 1 to 20% by weight, and more preferably 1 to 10% by weight, based on the total weight of the negative electrode active material layer.

The binder performs the role of improving adhesion between negative electrode active material particles and an adhesive force between the negative electrode active material and the negative electrode current collector. Specific examples thereof include a fluororesin binder including polyvinylidene fluoride(PVDF) or polytetrafluoroethylene(PTFE); a rubber-based binder including styrene-butadiene rubber (SBR), acrylonitrile-butadiene rubber, and styrene-isoprene rubber; a cellulose-based binder including carboxymethylcellulose(CMC), starch, hydroxypropylcellulose, and regenerated cellulose; a polyalcohol-based binder including polyvinyl alcohol; a polyolefin-based binder including polyethylene and polypropylene; a polyimide-based binder; a polyester-based binder; a silane-based binder, and the like. The binder may be contained in an amount of 1 to 30% by weight, preferably 1 to 20% by weight, and more preferably 1 to 10% by weight, based on the total weight of the negative electrode active material layer.

The negative electrode active material layer may be prepared, for example, by coating a negative electrode slurry containing a negative electrode active material and optionally a binder and a conductive material onto a negative electrode current collector, and drying the coated slurry, or may be prepared by casting the negative electrode slurry on a separate support and then laminating a film peeled from the support on the current collector.

### Separator

The lithium secondary battery according to the present disclosure may further include a separator interposed between the positive electrode and the negative electrode. The separator separates the negative electrode and the positive electrode from each other, and provides a moving passage for lithium ions. The separator can be used without particular limitation as long as it is used as a separator in a typical lithium secondary battery. Particularly, it is preferable that the separator has a low resistance against the ion migration of the electrolyte and has an excellent ability to impregnate the electrolyte. Specifically, the separator may be a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof. Further, a typical porous nonwoven fabric, for example, a nonwoven fabric made of a glass fiber having a high melting point, a polyethylene terephthalate fiber or the like can be used. In addition, in order to secure heat resistance or mechanical strength, a coated separator containing a ceramic ingredient or a polymer material can be used, and may be optionally used as a single layer or multilayer structure.

### Electrolyte

The electrolyte used herein may include various electrolytes that can be used in lithium secondary batteries, such as an organic liquid electrolyte, an inorganic liquid electrolyte, a solid polymer electrolyte, a gel-type polymer electrolyte, a solid inorganic electrolyte, a melt-type inorganic electrolyte, or a combination thereof, and the type thereof is not particularly limited.

For example, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate(DMC), diethyl carbonate(DEC), ethylmethyl carbonate(EMC), ethylene carbonate(EC), or propylene carbonate(PC); an alcohol-based solvent such as ethyl alcohol or isopropyl alcohol; nitriles such as R-CN (wherein R is a linear, branched or cyclic hydrocarbon group having 2 to 20 carbon atoms, and may include a double bond aromatic ring or ether bond); amides such as dimethylformamide; dioxolanes such as 1,3-dioxolane; sulfolane; or the like.

The lithium salt can be used without any particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt that can be used herein may be LiPF₆, LiN(FSO₂)₂, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like. The concentration of the lithium salt may be preferably used within the range of 0.1 to 5.0M.

In order to improve the life characteristics of the battery, suppress the decrease of the battery capacity, improve the discharging capacity of the battery, etc., the electrolyte may further include an additive, in addition to the above electrolyte ingredients. For example, the additive may include at least one selected from the group consisting of a halogen-substituted carbonate-based compound, a sulfate-based compound, a sultone-based compound, a borate-based compound, a benzene-based compound, an amine-based compound, a silane-based compound, and a lithium salt-based compound. Specifically, the additive may be at least one selected from vinylene carbonate, vinyl ethylene carbonate, fluoroethylene carbonate (FEC), ethylene sulfate (Esa), trimethylene sulfate (TMS), methyltrimethylene sulfate (MTMS), 1,3-propanesultone (1,3-PS), 1,3-propenesultone, 1,4-butane sultone, lithium oxalyldifluoroborate (LiODFB), lithium bisoxalatoborate (LiBOB), fluorobenzene, triethanolamine, ethylenediamine, tetravinylsilane, lithium difluorophosphate (LiPO₂F₂, LiDFP) and LiBF₄, but are not limited thereto. The additive may be contained in an amount of 0.1 to 10% by weight, preferably 0.1 to 5% by weight, based on the total weight of the electrolyte.

On the other hand, the electrode assembly may be various forms of electrode assemblies well known in the art, for example, a jelly-roll type, a stacked type, a stacked and laminated type, or a stack and folding type electrode assembly, and the form thereof is not particularly limited.

The jelly-roll type electrode assembly can be produced by interposing a sheet-shaped separator between a sheet-shaped positive electrode and a sheet-shaped negative electrode and then winding it in one direction.

The stacked type electrode assembly can be produced by cutting a positive electrode, a separator and a negative electrode into a desired shape and then sequentially stacking the cut positive electrode/separator/ negative electrode.

The stacked and laminated type electrode assembly can be produced by a method of stacking a positive electrode, a separator and a negative electrode to produce a plurality of unit cells, stacking the plurality of unit cells with a separator interposed therebetween, and then laminating them through a method such as heating.

The stack and folding type electrode assembly can be produced by a method of stacking a positive electrode, a separator and a negative electrode to produce a plurality of unit cells, arranging the plurality of unit cells on one surface or both side surfaces of a long folding separator and then winding the folding separator.

On the other hand, as the battery case, various battery cases known in the art, for example, a cylindrical battery case, a prismatic battery case, or a pouch-type battery case, and the like can be used, and the type thereof is not particularly limited.

### (2) Activating step

Next, an activating step of charging and discharging the battery-cell at least once to electrically activate the battery is performed. The activating step is a step of charging and discharging the battery cell to impart electrical properties and forming a SEI (Solid Electrolyte Interphase) film on the electrodes to stabilize the battery.

In the present disclosure, the charging capacity for Li₂MnO₃ (monoclinic) can be adjusted in some sections of the activation charging step, thereby reducing the rate of change of the Li₂MnO₃ (monoclinic) phase, that is, reducing the activation, and thus achieving a suppression effect on the elution of a transition metal.

First, the charging may include a first charging step of charging at SOC 5 or less.

The first charging step may be performed at a C-rate of 0.3C or less, preferably 0.1C to 0.3C. If the current rate in the first charging step is faster than 0.3C, the SEI film may be unstably formed on the electrode surface. If the SEI film is unstably formed on the electrode surface, the SEI film is easily decomposed during battery operation, causing rapid deterioration of the electrode, which can significantly reduce life characteristics.

The first charging step may be performed from SOC 0 to SOC 5. If the charging capacity in the first charging step satisfies the above range, a strong and dense SEI film is formed on the electrode surface, thereby realizing excellent life characteristics.

On the other hand, the first charging step can be performed in a constant current mode (CC mode).

Next, the charging may include a second charging step of charging at 0.3C or more, preferably at 0.3C to 0.6C in the range of SOC 5 to SOC 60. When the second charging step is performed at 0.3C to 0.6C, the activation of the Li₂MnO₃ (monoclinic) phase in the crystal structure of the positive electrode active material decreases, which makes it possible to suppress oxygen desorption and cation mixing from occurring during the activation process. In addition, the second charging step can be performed at a relatively fast C-rate, thereby reducing the time required for the activation process and shortening the battery production time.

When the charging capacity in the second charging step satisfies the above range, it is possible to suppress incomplete formation of the SEI film, and suppress oxygen desorption and cation mixing during the activation process, thereby minimizing the increase in positive electrode resistance.

Alternatively, the charging may include a third charging step of charging in a constant current mode from SOC 60 to SOC 100 and then charging in a constant voltage mode.

In the third charging step, the end voltage of charge in a constant current mode may be 4.5V to 4.6V, specifically 4.6V. When the end voltage of charge of the third charging step satisfies the above range, the lithium-rich manganese-based oxide can be activated, thereby realizing high capacity characteristics.

Meanwhile, the constant current charging may be performed at 0.3C to 0.8C, specifically 0.3C to 0.6C.

As the constant current charging in the third charging step is performed in the C-rate range as above, the activation of the Li₂MnO₃ (monoclinic) phase in the crystal structure of the positive electrode active material can be further reduced, and thus oxygen desorption and cation mixing during the activation process can be more effectively suppressed.

Further, the cutoff current during constant voltage mode charging may be 0.06C to 0.5C, specifically 0.06C to 0.4C.

As the constant voltage mode charging is terminated when the cut-off current reaches 0.06C to 0.5C, the time required for the activation process at high voltage can be shortened, thereby effectively preventing damage to the passive film formed on the electrode surface, and preventing the collapse of the crystal structure of the positive electrode. Further, the activation rate of Li₂MnO₃ (monoclinic) phase is reduced, and the structural changes in the positive electrode material is minimized, thereby effectively suppressing the elution of a transition metal.

Next, the activating step discharges the battery-cell charged through the first to third charging steps. At this time, the discharging may be performed at 0.3C to 0.7C. When the discharge rate satisfies the above range, the activation time can be appropriately controlled and the discharge capacity characteristics in the desired range can be realized.

On the other hand, the discharge may be performed in a constant current mode (CC mode).

On the other hand, the end voltage of discharge may be 2.0 V to 3.0 V, specifically 2.0 V.

On the other hand, the activating step is performed under temperature conditions of preferably, 25°C to 70°C, more preferably 40°C to 50°C. When the activating step is performed in the above temperature range, the effect of realizing high capacity can be obtained through appropriate activation of Li₂MnO₃.

Further, the activating step may be performed under pressurized conditions, if necessary. The pressurization can be performed by mounting the battery-cell to a jig and then applying pressure to the battery-cell via the jig. When the activating step is performed under pressurized conditions, it has the advantage that electrolyte impregnability is improved, and gases generated during the activating step are easily discharged.

On the other hand, although this is not essentially required, the activating step may further include an aging step, if necessary. The aging step allows the electrolyte to be uniformly impregnated into the electrode assembly, and stabilizes the battery, and may be performed before charging, during charging, and/or after discharging, and may be performed one or more times.

The aging step may be performed at a temperature of, for example, 20°C to 60°C, 20°C to 50°C, and preferably 30°C to 50°C. When the aging is performed at the above temperature, electrolyte impregnability and lithium mobility are improved so that activation can be performed more smoothly.

Hereinafter, the present disclosure will be described in more detail with reference to specific examples.

### [EXAMPLE]

### Example 1

### (Manufacture of battery cells)

A positive electrode active material: a conductive material: a PVDF binder were mixed at a weight ratio of 97 : 1 : 2 in N-methylpyrrolidone to prepare a positive electrode slurry. At this time, Li_{1.38}[Ni_{0.363}Co_{0.005}Mn_{0.642}]O₂ was used as the positive electrode active material, and carbon nanotube(CNT) was used as the conductive material. The positive electrode slurry was coated onto an aluminum current collector sheet, dried, and then rolled to manufacture a positive electrode.

A negative electrode active material: a conductive material: a binder were mixed at a weight ratio of 96:1:3 in water to prepare a negative electrode slurry. At this time, graphite was used as the negative electrode active material, a carbon black was used as a conductive material, and SBR and CMC were used at a weight ratio of 2:1 as the binder. The negative electrode slurry was coated onto a copper current collector sheet, dried, and then rolled to manufacture a negative electrode.

A separator was interposed between the positive electrode and the negative electrode manufactured as above to produce an electrode assembly, and the electrode assembly was inserted into a battery case, and then an electrolyte was injected, thereby manufacturing a battery cell.

### (Activating step)

The battery cells were pre-aged for 2 days, then charged to SOC 3 in a constant current mode (0.2C) at 45°C (first charging step), charged to SOC 60 in a constant current mode (1.0C) (second charging step), and charged to 4.6V in a constant current mode (0.4C), then charge was performed by changing to constant voltage mode and charging was terminated when the current reached 0.15C (third charging step). Then, the charged battery cell was discharged to 2.0V at a constant current (0.6C).

### Comparative Example 1

The battery cell prepared in Example 1 was pre-aged for 2 days, charged to SOC 3 in a constant current mode (0.2C) at 45°C (first charging step), charged to SOC 60 in a constant current mode (1.0C) (second charging step), charged to 4.6V in a constant current mode (0.4C), then charging was performed by changing to constant voltage mode, and charging was terminated when the current reached 0.05C (third charging step). Then, a battery cell was manufactured in the same manner as Example 1 except that the charged battery cells were discharged to 2.0V with a constant current of 0.6C.

### [EXPERIMENTAL EXAMPLE]

### Experimental Example 1.

The Li₂MnO₃ activation rate (%) of the battery cells of Example 1 and Comparative Example 1 were calculated, respectively, and then the Li₂MnO₃ activation rate (%) of Example 1 was expressed as a percentage based on the Li₂MnO₃ activation rate (%) of Comparative Example 1, and is shown in Table 1 below. At this time, the Li₂MnO₃ activation rate (%) of each battery cell can be calculated by dividing the charge capacity of the cell, which was obtained by developing from 4.3V and charging to the end voltage of charge, by the charge capacity of the cell when charged from 2.0V to 4.6V.

**[Table 1]**

| | Li₂MnO₃ activation rate (%) | Li₂MnO₃ activation rate (%) based on Comparative Example 1 |
|---|---|---|
| Example 1 | 60.64 | 95.9 |
| Comparative Example 1 | 63.23 | 100 |

Referring to Table 1, it can be seen that in the case of the battery cell activated by the method of Example 1, the activation rate of Li₂MnO₃ is reduced compared to the battery cell activated by the method of Comparative Example 1.

### Experimental Example 2. Evaluation of transition metal elution

The lithium secondary battery prepared in Example 1 and the lithium secondary battery prepared in Comparative Example 1 were disassembled, respectively, and the amount of metal elution electrodeposited on the negative electrode surface was measured using inductively coupled plasma optical emission spectroscopy (ICP-OES), and the results are shown in Table 2 and FIG. 1 below.

**[Table 2]**

| | Amount of transition metal elution after activation (mg/kg) |
|---|---|
| Example 1 | 50 |
| Comparative Example 1 | 85 |

Referring to Table 2 and FIG. 1, it can be confirmed that in the case of the lithium secondary battery of Example 1 in which constant voltage charging was performed, as the Li₂MnO₃ activation rate decreases, structural changes in the positive electrode active material can be minimized as shown in Table 1, so that the amount of transition metal elution is reduced by about 40% or more compared to the lithium secondary battery of Comparative Example 1.

## Claims

1. A method for manufacturing a lithium secondary battery, the method comprising the steps of:
preparing a battery cell including a positive electrode, a negative electrode and an electrolyte, with the positive electrode containing a lithium-rich manganese-based oxide in which the content of manganese in all metals excluding lithium is greater than 50 mol%, and the ratio of the number of moles of lithium to the number of moles of all metals excluding lithium (Li/Me) is greater than 1; and
charging and discharging the battery cell at least once to activate the battery,
wherein in the activating step, the battery cell is charged from SOC 60 to SOC 100 in constant current mode, and then charged in a constant voltage mode, and the cut-off current at a constant voltage charging mode is 0.06C to 0.5C.
[Chemical Formula 1] LiₐNi_{b}Co_{c}Mn_{d}MₑO₂
wherein, in Chemical Formula 1, 1 < a, 0≤b≤0.5, 0≤c≤0.1, 0.5≤d<1.0, and 0≤e≤0.2, and M is at least one selected from the group consisting of Al, B, Co, W, Mg, V, Ti, Zn, Ga, In, Ru, Nb, Sn, Sr and Zr.

2. The method for manufacturing a lithium secondary battery according to claim 1, wherein:
the lithium-rich manganese-based oxide is represented by the following Chemical Formula 1.
[Chemical Formula 1] LiₐNi_{b}Co_{c}Mn_{d}MₑO₂
wherein, in Chemical Formula 1, 1 < a, 0≤b≤0.5, 0≤c≤0.1, 0.5≤d<1.0, and 0≤e≤0.2, and M is at least one selected from the group consisting of Al, B, Co, W, Mg, V, Ti, Zn, Ga, In, Ru, Nb, Sn, Sr and Zr.

3. The method for manufacturing a lithium secondary battery according to claim 2, wherein:
in Chemical Formula 1, 1.1≤a≤1.5, 0.1≤b≤0.4, 0≤c≤0.05, 0.5≤d≤0.80, and 0≤e≤0.1.

4. The method for manufacturing a lithium secondary battery according to claim 1, wherein:
the end voltage of charge in a constant-current mode is 4.5V to 4.6V.

5. The method for manufacturing a lithium secondary battery according to claim 1, wherein:
the current rate at a constant current charging mode is 0.3C to 0.8C.

6. The method for manufacturing a lithium secondary battery according to claim 1, wherein:
the cut-off current at a constant voltage charging mode is 0.06C to 0.4C.

7. The method for manufacturing a lithium secondary battery according to claim 1, wherein:
the activating step further comprises charging from SOC 0 to SOC 5 at 0.1C to 0.3C.

8. The method for manufacturing a lithium secondary battery according to claim 1, wherein:
the activating step further comprises charging from SOC 5 to SOC 60 at 0.3C to 0.6C.

9. The method for manufacturing a lithium secondary battery according to claim 7 or 8, wherein:
the charging step is performed in a constant current mode.

10. The method for manufacturing a lithium secondary battery according to claim 1, wherein:
the activating step comprises discharging from 0.3C to 0.7C until reaching at 2.0V.
